(19) Europäisches Patentamt
European Patent Office
Office européen des brevets

(11) EP 1 074 818 A2

(12) EUROPÄISCHE PATENTANMELDUNG

(43) Veröffentlichungstag:
07.02.2001 Patentblatt 2001/06

(51) Int. Cl.7: G01D 5/16

(21) Anmeldenummer: 00114334.6

(22) Anmeldetag: 04.07.2000

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 06.08.1999 DE 19937206

(71) Anmelder:
SIEMENS AKTIENGESELLSCHAFT
80333 München (DE)

(72) Erfinder:
• Lichtinger, Harald
  Auburn Hills, MI 48326/308 (US)
• Östreicher, Ralf
  76870 Kandel (DE)
• Dirmeyer, Josef
  92439 Bodenwöhr (DE)
• Hufgard, Erich
  93049 Regensburg (DE)

(54) Positionsbestimmungseinrichtung

(57) Eine Positionsbestimmungseinrichtung enthält wenigstens einen Magnetsensor (10), dessen elektrischer Widerstand von der Richtung eines auf in einwirkenden Magnetfeldes abhängt. Mit einem beweglichen Bauteil, dessen Position zu bestimmen ist, ist ein relativ zu dem Magnetsensor (10) beweglicher Magnetstab (20) verbunden. Der Magnetstab (20) ist längs seiner Länge derart magnetisiert, daß die Feldlinien des von ihm ausgehenden Magnetfeldes längs seiner Länge unterschiedliche Winkel mit seiner Längsrichtung bilden.

FIG 1

**Beschreibung**

Die Erfindung betrifft eine Positionsbestimmungseinrichtung gemäß dem Oberbegriff des Anspruchs 1. Die Erfindung bezieht sich weiter auf eine Airbageinrichtung in einem Kraftfahrzeug. Zusätzlich betrifft die erfindung ein Verfahren zum Herstellen eines Magnetstabes für solche Einrichtungen.

Die Bestimmung der Position eines Fahrzeugsitzes in einem Kraftfahrzeug ist beispielsweise erforderlich, wenn das Fahrzeug mit einer sogenannten Memoryfunktion ausgestattet ist. Bei dieser Komfortfunktion kann der Fahrzeugsitz, insbesondere Fahrersitz, entsprechend auf einem Datenträger gespeicherten Daten selbsttätig in vorbestimmte Positionen bewegt werden. Diese vorbestimmten Positionen können von Fahrzeugbenutzern eingestellt werden und werden in der eingestellten Stellung auf den Datenträger eingelesen. Die dabei üblicherweise verwendeten Sensoren sind Potentiometer oder digitale Hallsonden, die mit entsprechenden Stellmotoren zur Sitzverstellung verbunden sind. In jüngerer Zeit werden Sicherheitssysteme, insbesondere Airbagsysteme eingesetzt, die ihren Betrieb selbsttätig an unterschiedliche Bedingungen anpassen. Dabei spielt für die Auslösung und/oder das Aufblasen eines Airbags die Position des Fahrzeuginsassen relativ zum Airbag eine Rolle. Eine Größe, die diese Position maßgeblich beeinflußt, ist die Position des Fahrzeugsitzes. Es besteht daher ein zunehmender Bedarf an Positionsbestimmungssensoren, die den hohen Anforderungen genügen, die an die Sicherheitselektronik eines Kraftfahrzeugs gestellt werden.

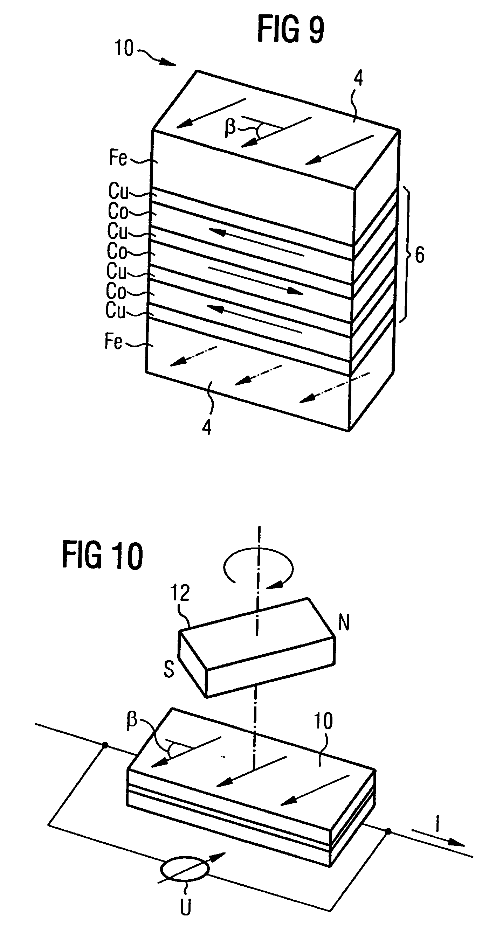

Aus der Druckschrift "Magnetic Sensors; Giant Magnetic Registers", Application Notes 10.98 der Siemens AG, ist ein Magnetsensor bekannt, dessen elektrischer Widerstand von der Richtung eines ihn durchsetzenden Magnetfeldes abhängt. Der Aufbau eines solchen auch als "Giant Magneto Resistor" (GMR) bezeichneten Magnetsensors ist in Fig. 9 dargestellt. Zwischen zwei aus Eisen oder anderem weichmagnetischem Material bestehenden, verhältnismäßig dicken Schichten 4 befindet sich ein Stapel 6 von Schichten, die abwechselnd aus hartmagnetischem Material, wie Kobalt, und nichtmagnetischem Material, wie Kupfer, bestehen. Die nichtmagnetischen Schichten trennen die weichmagnetischen Schichten von den hartmagnetischen Schichten und die hartmagnetischen Schichten untereinander. Die Kupferschichten sind so dünn, daß eine Spin-Kopplung zwischen den hartmagnetischen Schichten besteht, so daß diese einen künstlichen Antiferromagneten bilden.

Wenn ein entsprechend Fig. 9 aufgebauter Magnetsensor 10 gemäß Fig. 10 in das Magnetfeld beispielsweise eines zweipoligen Stabmagneten 12 gebracht wird, werden die weichmagnetischen Schichten 4 an dessen Ober- und Unterseite von dem Magnetfeld des Stabmagneten 12 magnetisiert, wobei die Magnetfeldlinien ihre Richtung entsprechend einer Drehung des Stabmagneten 12 ändern. Die hartmagnetischen, beispielsweise aus Kobalt bestehenden Schichten des Stabes 6 dagegen behalten ihre Magnetisierungsrichtung bei. Insgesamt führt dies dazu, daß der elektrische Widerstand des Magnetsensors 10 bei Beaufschlagung mit einem Strom I entsprechend Fig. 10 von der Richtung der Magnetisierung der weichmagnetischen Schichten 4 und damit der Richtung der auf dem Magnetsensor 10 einwirkenden Magnetfeldlinien abhängt.

Solche sogenannte GMR-Magnetsensoren werden bisher hauptsächlich in Drehwinkelgebern verwendet, in denen eine Auflösung von wenigen Hundertstel Grad erreicht werden kann. Auch lineare Wegsensoren werden unter Verwendung von GMR-Magnetsensoren gebaut. Dazu wird ein Dipolmagnet ähnlich wie der Dipolmagnet 12 der Fig. 10 an einem Magnetsensor 10 vorbeigeführt. Der gekrümmte Verlauf des Magnetfeldes sorgt dabei für eine sich stetig ändernde Richtung der den Magnetsensor durchdringenden Feldlinien. Bei Verwendung eines Dipolmagneten läßt sich so ein Winkelbereich des Feldes von max. 180° erfassen. Die Kennlinie des Wegsensors wird dabei u.a. vom Abstand und Winkel des Magnetsensors zum Dipolmagneten bestimmt. Diese Art von Wegsensor wird meist für Wegstrecken von wenigen Millimetern eingesetzt. Für größere Wegstrecken, beispielsweise mehrere Dezimeter, ist sie ungeeignet, da bei einem Dipolmagneten von mehreren Dezimetern Länge die Feldlinien nahe dem Umfang über eine weite Strecke annähernd parallel zur Oberfläche verlaufen. Lediglich nahe den Enden des Dipolmagneten ändert sich die Feldrichtung deutlich. Dies hat zur Folge, daß ein solcher Wegsensor, in einem weitem Bereich eine sehr niedrige Empfindlichkeit besitzt. Bewegt man den als Dipol ausgebildeten Stabmagneten in größerem Abstand vom Sensor in dessen Längsrichtung, so ist der Gradient des Feldes zwar linearer; die Feldstärke nimmt jedoch ab.

Der Erfindung liegt die Aufgabe zugrunde, eine Positionsbestimmungseinrichtung zu schaffen, die bei einfachem Aufbau, hoher Funktionssicherheit und guter Empfindlichkeit zur Positionsbestimmung von über größere Strecken, beispielsweise über mehrere Dezimeter, beweglichen Bauteilen, geeignet ist.

Diese Aufgabe wird mit den Merkmalen des Hauptanspruchs gelöst.

Dadurch, daß der Magnetstab längs seiner Länge derart magnetisiert ist, daß die Feldlinien des von ihm ausgehenden Magnetfelds längs seiner Länge unterschiedliche Winkel mit seiner Längsrichtung bilden, läßt sich die Feldrichtung relativ zu der Magnetsensorbaugruppe bei einer Bewegung des Magnetstabes gezielt ändern, so daß auch größere Bewegungen sicher erfaßt werden können. Der auf die Richtung der Feldlinien ansprechende Magnetsensor kann unterschiedlichster Bauart sein, beispielsweise seine Induktivität, Kapazität oder eine sonstige meßbare Eigenschaft ändern.

Vorteilhafterweise ist gemäß dem Anspruch 2 der Magnetsensor wie anhand Fig. 9 und 10 beschrieben aufgebaut und ändert seinen elektrischen Widerstand.

Die Unteransprüche 3 bis 6 sind auf vorteilhafte Merkmale und Weiterbildungen der Positionsbestimmungseinrichtung gerichtet.

Die Positionsbestimmungseinrichtung eignet sich für vielerlei Einsatzzwecke, bei denen die Position eines beweglichen Bauteils mit verhältnismäßig großer Bewegungsamplitude bestimmt werden soll. Dabei kann das bewegliche Bauteil in zweckentsprechender Weise mit dem erfindungsgemäß magnetisierten Magnetstab gekoppelt sein, so daß der Magnetstab vorteilhafterweise eine Längsbewegung längs des Magnetsensors ausführt, auch wenn das bewegliche Bauteil verdreht, verkippt oder sonstwie bewegt wird.

Die Positionsbestimmungseinrichtung kann, da der Magnetstab dem Magnetsensor unmittelbar benachbart sein kann, kompakt und platzsparend ausgeführt sein.

Besonders vorteilhaft ist gemäß dem Anspruch 7 die Verwendung der erfindungsgemäßen Positionsbestimmungseinrichtung in der Airbag-Einrichtung eines Kraftfahrzeugs, bei der die Position eines Fahrzeugsitzes, an dem der Magnetstab angebracht ist, außerordentlich zuverlässig bestimmt werden kann.

Mit den Merkmalen des Anspruchs 8 wird ein einfacher, kompakter Aufbau erzielt.

Der Anspruch 9 kennzeichnet ein vorteilhaftes Herstellungsverfahren für einen Magnetstab, wie er in den vorgenannten Einrichtungen verwendet wird.

Die Erfindung wird im folgenden anhand schematischer Zeichnungen beispielsweise und mit weiteren Einzelheiten erläutert.

Es stellen dar:

Fig. 1 eine schematische Aufsicht auf einen Fahrzeugsitz mit Positionsbestimmungseinrichtung,

Fig. 2 einen vergrößerten Ausschnitt der Fig. 1 zur Erläuterung der Magnetisierung des Magnetstabes,

Fig. 3 eine Aufsicht auf einen Magnetstab mit schematisch dargestellten Magneten,

Fig. 4 eine Vorrichtung zur Herstellung eines Magnetstabes,

Fig. 5 und 6 Blockschaltbilder von Magnetsensorbaugruppen,

Fig. 7 eine der Fig. 2 ähnliche Ansicht einer Ausführungsform der Positionsbestimmungseinrichtung mit zwei in gegenseitigem Abstand angebrachten Magnetsensoren,

Fig. 8 Kurven zu Erläuterung der Funktion der Anordnung gem. Fig. 7 und

Fig. 9 und 10 zwei schematische Ansichten eines Magnetfeldsensors gemäß dem Stand der Technik.

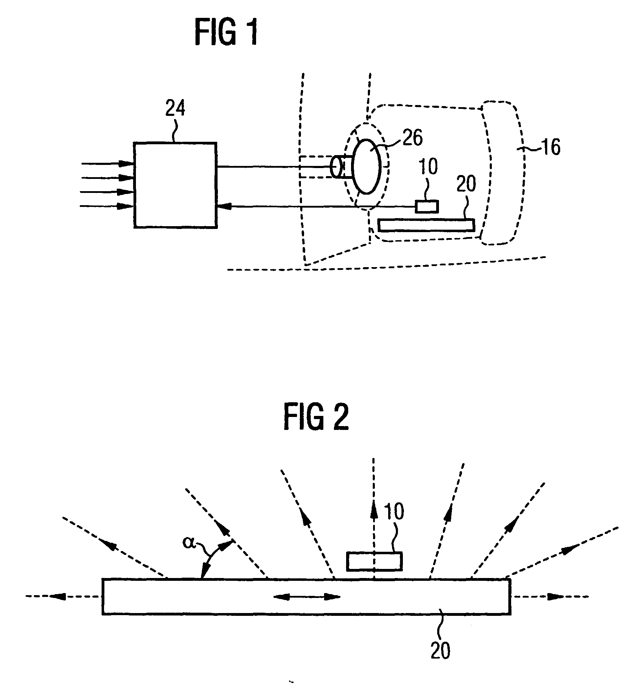

In Fig. 1 ist gestrichelt angedeutet ein Fahrersitz 16 eines Kraftfahrzeuges, an dem ein Magnetstab 20 befestigt ist, der bei einer Längsverschiebung des Fahrersitzes 16 sich längs eines Magnetsensors 10 bewegt, der gem. Fig. 9 aufgebaut und fahrzeugfest angebracht ist.

Der Magnetsensor 10 ist mit einem Steuergerät 24 verbunden, das den Betrieb einer im Lenkrad vor dem Fahrersitz untergebrachten Airbagbaugruppe 26 steuert.

Der Aufbau und die Funktionsweise solcher Airbageinrichtungen sind an sich bekannt und werden daher nicht erläutert.

In einem Speicher des Steuergerätes 24 sind Positionen des Fahrersitzes zusammen mit jeweiligen Ausgangssignalen des Magnetsensors 10 abgelegt, so daß entsprechend dem jeweiligen Ausgangssignal die Position des Fahrersitzes erkannt wird und der Betrieb der Airbagbaugruppe 26 daran angepaßt werden kann.

Es versteht sich, daß die Anordnung nicht nur für den Fahrersitz, sondern auch für den Beifahrersitz oder weitere verschiebbare Sitze, die mit Airbageinrichtungen oder sonstigen passiven Sicherheitseinrichtungen, beispielsweise Gurtstrammen, ausgerüstet sind, eingesetzt werden kann.

Fig. 2 zeigt den Magnetstab 20 und den Magnetsensor 10 in vergrößertem Maßstab. Weiter sind in Fig. 2 gestrichelt die magnetischen Feldlinien dargestellt, die entsprechend der Magnetisierung der einzelnen Bereiche des Magnetstabes 20 von ihm ausgehen bzw. in ihn hineingehen. Wie ersichtlich, ist der Magnetstab 20 derart magnetisiert, daß die Änderung des Winkels $\alpha$ zwischen den magnetischen Feldlinien und der Längsachse des Magnetstabs 20 je Längeneinheit des Magnetstabs längs dessen Länge unterschiedlich ist und zwar im gemäß Fig. 2 rechten Bereich größer als im linken Bereich. Damit wird beispielsweise erreicht, daß in der Lenkrad-nahen Position des Fahrersitzes eine höhere Empfindlichkeit erzielt wird als in der Lenkrad-fernen Position.

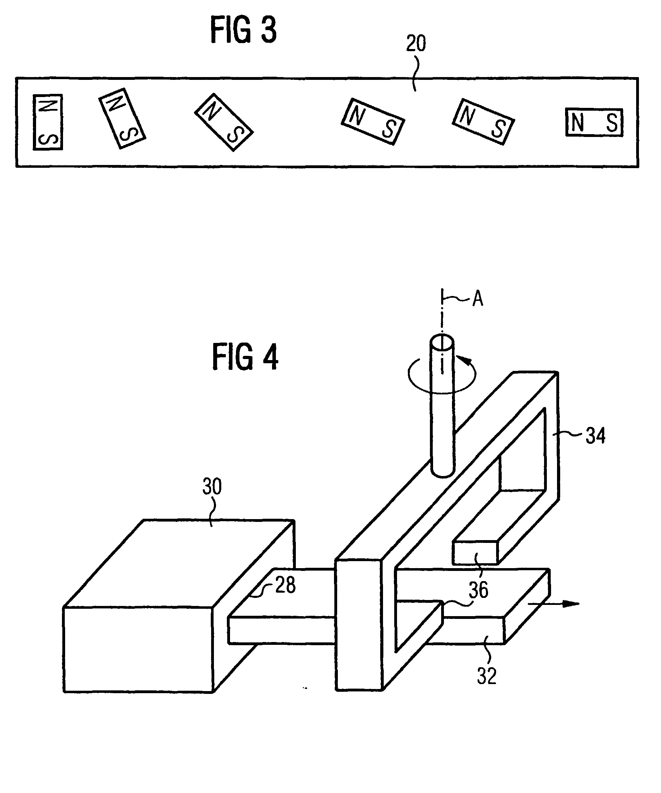

Fig. 3 zeigt eine schematische Ansicht des Magnetstabs 20 in vergrößertem Maßstab, wobei mit N und S die Pole der einzelnen Magnete angedeutet sind, die längs der Länge des Magnetstabs unterschiedlich ausgerichtet sind.

Fig. 4 zeigt eine Vorrichtung zum Herstellen eines Magnetstabes. Aus einer Extrusionsöffnung 28 einer Extrudiervorrichtung 30 wird ein Strang 32 mit hartmagnetischem Material, beispielsweise ein Strang aus thermoplastischem Kunststoff, in den Ferritmaterial eingelagert ist, in Richtung des eingezeichneten Pfeils extrudiert. Der Querschnitt des Strangs 32 entspricht dem des herzustellenden Magnetstabes. Der Strang 32 wird an einem Magneten 34 entlangbewegt, dessen Polflächen 36 zu beiden Seiten des Strangs 32 unmittelbar über diesem angeordnet sind. Der Magnet, der ein Permanentmagnet oder Elektromagnet sein kann, ist mittels eines nicht dargestellten Antriebs um eine etwa senkrecht zur Vorschubrichtung des Strangs 32 verlaufende Achse A drehbar, sodaß sich der Winkel zwischen den durch den Strang 32 hindurchtretenden Feldlinien und der Längsachse des Strangs ändert. Je nach Vorschubgeschwindigkeit des Strangs, Drehrichtung und Drehgeschwindigkeit des Magneten 34 sowie ggfs. der Stärke des Magnetfeldes läßt sich der Strang 32 in vorbestimmter Weise magnetisieren, sodaß nach Durchtrennung des Strangs in einzelne Magnetstäbe 20 (Fig. 3) an den jeweiligen Anwendungszweck angepaßte Magnetisierungen erzielbar sind.

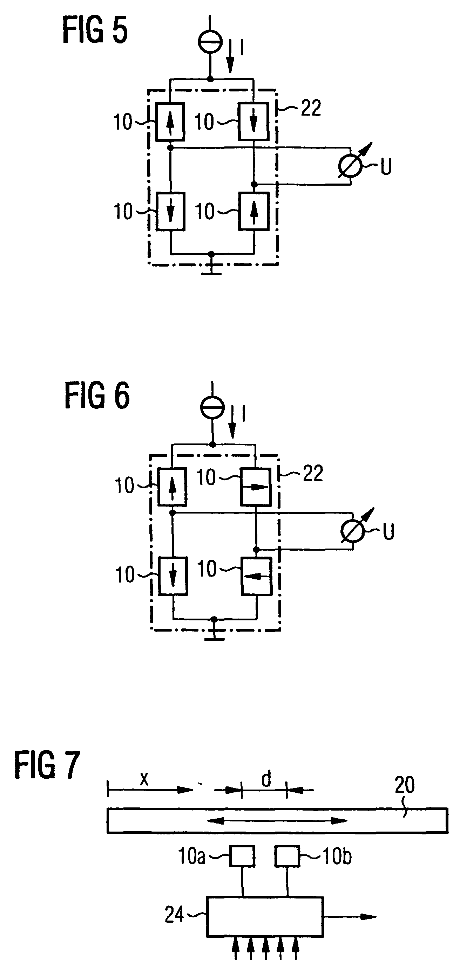

Zur Auswertung der Signale der Magnetsensoren 10 sind unterschiedlichste Schaltungen denkbar. Vorteilhaft sind Brückenschaltungen 22, wie sie beispielsweise in Fig. 5 und 6 dargestellt sind und die mehrere Magnetsensoren zu einer Magnetsensorbaugruppe zusammenfassen. Die Brückenschaltung gem. Fig. 5 enthält vier Magnetsensoren 10, von denen je zwei gegensinnig magnetisiert sind. Fig. 6 zeigt eine Brückenschaltung mit vier Magnetsensoren 10, die senkrecht zueinander und jeweils paarweise gegensinnig magnetisiert sind. In einer abgeänderten Ausführungsform könnte je einer der in Reihe geschalteten Magnetsensoren durch einen Ohm'schen Widerstand ersetzt sein.

Insgesamt läßt sich, wenn der in vorbestimmter Weise magnetisierte Magnetstab 20 längs eines Magnetsensors 10 in der Anordnung der Fig. 1 vorbeibewegt wird, über die gesamte Bewegungsamplitude des Magnetstabes 20, der sich über die gesamte Verstellbarkeit des Sitzes erstrecken kann, eine deutliche Abhängigkeit der Spannung U von dem Winkel β und damit von der Position des Magnetstabs 20 bzw. des Sitzes erzielen, aufgrund derer im Steuergerät 24 die genaue Position des Sitzes ermittelt werden kann. Es versteht sich, daß, wenn der Magnetstab nahe an dem Magnetsensor vorbeigeführt wird und seine Pole zu dem Magnetsensor hin oder von ihm weg zeigen, die Winkel α und β gleich sein können.

Fig. 7 zeigt eine Anordnung, bei der zwei Magnetsensoren 10a und 10b neben dem in Richtung des Doppelpfeils zusammen mit dem Sitz 16 verschiebbaren Magnetstab 20 angeordnet sind. Der Abstand zwischen den Magnetsensoren 10a und 10b ist mit b, die Verschiebung des Magnetstabes 22 bzw. des Fahrzeugsitzes ist mit x bezeichnet.

Für den Magnetsensor 10a gilt dann bei linearer Abhängigkeit seines Ausgangssignals von der Verschiebungsrichtung x die Beziehung:

$$R_x = R_o(1+ax) \qquad (1)$$

wobei $R_o$ den Widerstand des Magnetsensors 10a bedeutet, wenn sich der Magnetstab 20 mit seinem Anfang neben ihm befindet, a die Änderung des Widerstandes mit der Verschiebung ist, x die Verschiebung bedeutet und $R_x$ der Widerstand nach einer Verschiebung des Magnetstabes 20 um die Strecke x ist.

Für den Magnetsensor 10b, der dem Sensor 10a gleicht, gilt die Formel (2)

$$R_{x+d} = R_o(1+a(x+d)) \qquad (2)$$

Die Werte $R_x$ und $R_{x+d}$ werden jeweils gemessen. Wenn ihr Verhältnis mit $A_x$ bezeichnet wird, gilt, wenn der Ausdruck (2) durch den Ausdruck (1) dividiert wird:

$$A_x = \frac{(1+ax)}{(1+a(x+d))} \qquad (3)$$

Somit kann das jeweilige x, d.h. die Position des Magnetstabs 20, aus der Formel (3) errechnet werden, ohne daß eine Absolutmessung des Widerstandes erforderlich ist. Auf diese Weise ist es möglich, eine Temperaturabhängigkeit der Magnetsensoren weitgehend zu kompensieren, d.h. unabhängig von der Temperatur eine genaue Positionsbestimmung vorzunehmen.

Die Verwendung zweier Magnetsensoren 10 hat den weiteren Vorteil, daß bei einer großen Abweichung zwischen ihren Ausgangssignalen ein Fehler in der Meßanordnung erkannt wird. Mittels einer einfachen Schwellwertschaltung kann somit ein Fehler detektiert werden. Durch Plausibilitätsprüfung der Signale der einzelnen Magnetsensoren kann die intakte Baugruppe identifiziert werden und deren Ausgangssignal als noch ausreichend genaues Meßsignal verwendet werden.

Im Folgenden werden weitere Beispiele von Meßanordnungen und -ergebnissen angegeben:

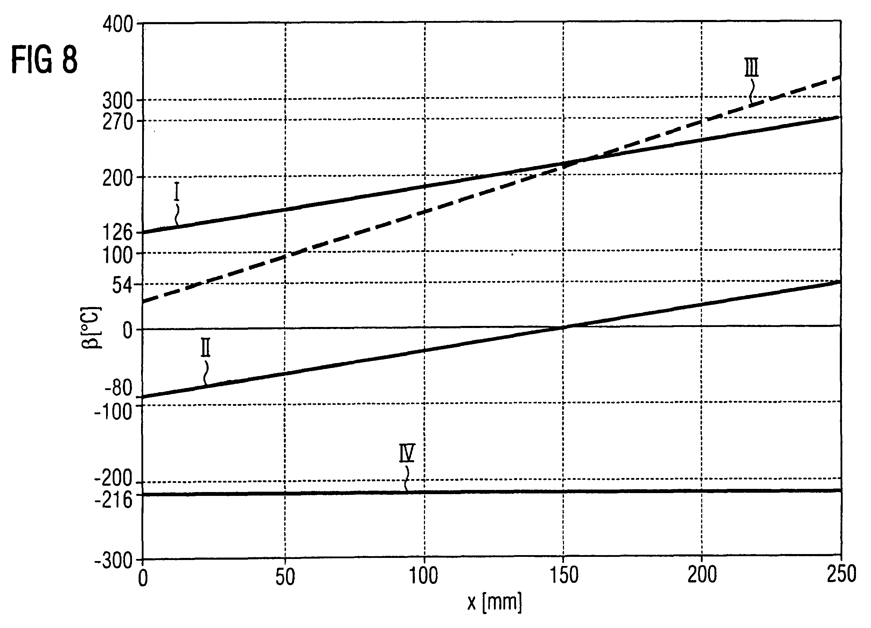

In Fig. 8 sind für eine Anordnung gem. Fig. 7 auf der Senkrechten der Winkel β (Fig. 10) angegeben und auf der Waagrechten die Verschiebung bzw. Position des Magnetstabbs bzw. des Sitzes. In der Nullposition sei der linke Magnetsensor 10a einem Magnetfeld ausgesetzt, das einen Winkel von -90° mit seinem eigenen Feld bildet. Der Magnetstab 22 sei derart magnetisiert, daß der Winkel zwischen seinem Magnetfeld und dem des Magnetsensors 10b linear mit der Sitzposition zunimmt und am Ende der Verschiebbarkeit von 250 mm 54° erreicht. Der Magnetsensor 10b sei 50 mm vom Magnetsensor 10a entfernt auf einer Leiterplatte montiert und in seinem Feld um 180° verdreht oder werde bei einer Vollbrücke mit ungekehrter Polarität ausgewertet. Zwischen den Signalen der beiden Magnetsensoren ergibt sich dann eine Phasenverschiebung von

$\Delta\varphi = 180^{°} + 180^{°} \times 50mm/250mm = 216^{°}$.

Diese Phasenverschiebung bleibt während der gesamten Sitzverschiebung konstant. Die Beziehung zwischen dem Ausgangssignal eines Magnetsensors bzw. der zugehörigen Brückenschaltung und dem Winkel β ist im allgemeinen nicht linear. Sie kann jedoch in an sich bekannter Weise durch entsprechende Korrekturtabellen linearisiert werden, sodaß der Wert des Winkels β der Fig. 8 als Meßwert genommen werden kann. Die Gerade I zeigt dann das Meßsignal des Magnetsensors 10a für unterschiedliche Sitzpositionen, die Kurve II das Meßsignal des Sensors 10b, die Kurve III das Summensignal und die Kurve IV das Differenzsignal. Die Sitzposition kann somit aus jeder der Kurven I, II oder III bestimmt werden. Ergeben sich keine übereinstimmenden Sitzpositionen, so deutet dies auf eine Fehlfunktion eines Magnetsensors, einer Brückenschaltung oder eine Abweichung des Magnetfeldgradienten hin, wie sie beispielsweise durch eine äußere Feldbeeinflussung gegeben sein kann. Dadurch, daß die Nullgänge der beiden Meßsignale im störungsfreien Betrieb um 36° phasenverschoben sind, können auch Fehler, die beide Magnetsensoren gleichzeitig betreffen, beispielsweise eine fehlende Versorgungsspannung, erkannt werden. Anstelle einer numerischen Korrektur der Kennlinien ist es auch möglich, den Magnetstab derart zu magnetisieren, daß der Zusammenhang zwischen der Sitzposition und dem zugehörigen Ausgangssignal der Sensorauswerteschaltung ohne Umrechnung linear ist. Dies vereinfacht die Auswertung, erfordert jedoch bei der Magnetisierung erhöhten Aufwand.

Bei der Montage der Meßanordnung ist darauf zu achten, daß der Magnetstab nicht mit ferromagnetischen Werkstoffen in Wechselwirkung kommt. Da der Magnetstab ferromagnetische Werkstoffe seiner Umgebung magnetisiert, kann es dadurch zu Veränderungen der Feldgeometrie kommen. Bei Sitzen aus Stahlblech sollte eine Halterung aus Kunststoff oder Aluminium einen Abstand zwischen Magnet und Blech garantieren, der mindestens einer Querschnittsabmessung des Magnetstabs entspricht.

**Patentansprüche**

1. Positionsbestimmungseinrichtung,
   enthaltend wenigstens einen Magnetsensor (10), dessen Ausgangsgröße von der Richtung eines auf ihn einwirkenden Magnetfeldes abhängt, und einen mit einem beweglichen Bauteil (16), dessen Position zu bestimmen ist, gekoppelten Magnetstab (20), der relativ zu dem Magnetsensor beweglich ist, dadurch gekennzeichnet, daß der Magnetstab (20) längs seiner Länge derart magnetisiert ist, daß die Feldlinien des von ihm ausgehenden Magnetfeldes längs seiner Länge unterschiedliche Winkel (α) mit seiner Längsrichtung bilden.

2. Positionsbestimmungseinrichtung nach Anspruch 1,
   dadurch gekennzeichnet, daß der Magnetsensor (10) einen von der Richtung des auf ihn einwirkenden Magnetfeldes abhängigen elektrischen Widerstand aufweist.

3. Positionsbestimmungseinrichtung nach Anspruch 1 oder 2,
   dadurch gekennzeichnet, daß der Magnetstab (20) in seiner Längsrichtung längs des Magnetsensors (10) beweglich ist.

4. Positionsbestimmungseinrichtung nach Anspruch 1 bis 3,
   dadurch gekennzeichnet, daß mehrere Magnetsensoren (10) mit unterschiedlich ausgerichteten Magnetisierungen in einer Brückenschaltung zu einer Magnetsensorbaugruppe (22) zusammengeschaltet sind.

5. Positionsbestimmungseinrichtung nach einem der Ansprüche 1 bis 4,
   dadurch gekennzeichnet, daß der Magnetstab (20) derart magnetisiert ist, daß sich der Winkel (α) seiner Feldlinien zu seiner Oberfläche längs seiner Länge je Längeneinheit unterschiedlich stark ändert.

6. Positionsbestimmungseinrichtung nach einem der Ansprüche 1 bis 5,
   dadurch gekennzeichnet, daß längs des Magnetstabes (20) in im Vergleich zur Länge des Magnetstabes kurzem Abstand zwei Magnetsensoren (10) angeordnet sind.

7. Airbageinrichtung in einem Kraftfahrzeug mit einem Airbag,
   der in Abhängigkeit von der Position eines Fahrzeugsitzes (16) aufgeblasen wird, und einer Positionsbestimmungseinrichtung zur Bestimmung der Position des Fahrzeugsitzes, wobei der Fahrzeugsitz das bewegliche Bauteil einer Positionsbestimmungseinrichtung nach einem der Patentansprüche 1 bis 4 ist.

8. Airbageinrichtung nach Anspruch 7,
   wobei der Magnetstab (20) am Fahrzeugsitz (16) befestigt ist.

9. Verfahren zum Herstellen eines längs seiner Länge unterschiedlich magnetisierten Magnetstabs, enthaltend folgende Arbeitsschritte:

   - Extrudieren eines Strangs(32) aus magnetisch hartem Material,

- Vorbeibewegen des extrudierten Strangs an einem Bereich zwischen Polflächen(36) eines Magneten (34),
- Drehen des Magneten derart, daß sich der Winkel zwischen den den Strang durchschneidenden Feldlinien und dessen Längsachse ändert, und
- Abtrennen des Magnetstabs von dem magnetisierten Strang.

## FIG 1

## FIG 2

# FIG 3

20

N S    N S    N S    N S    N S    N S

# FIG 4

A

34

30

28

36

32

**FIG 5**

**FIG 6**

**FIG 7**

FIG 8

EP 1 074 818 A2

## FIG 9

## FIG 10